# EUROPEAN PATENT APPLICATION

(11) **EP 3 174 322 A1**
(43) Date of publication of application: **31.05.2017**
(21) Application number: 14881547.5
(22) Date of filing: 23.09.2014
(51) Int. Cl.: H04W 8/02

(54) **METHOD FOR DELETING NOTIFICATION RESOURCE, AND COMMON SERVICE ENTITY**

(30) Priority: 25.07.2014 CN 201410361473
(71) Applicant: ZTE Corporation, Shenzhen, Guangdong 518057 (CN)
(72) Inventor: WU, Hao, Shenzhen Guangdong 518057 (CN)
(74) Representative: HGF Limited
(86) International application number: PCT/CN2014/087149
(87) International publication number: WO 2015/117330

(57) **Abstract**

A method for deleting an announcement resource includes the following steps. A common service entity CSE receives a resource update request including an original resource address parameter and an announce-to parameter. The CSE searches out a corresponding original resource created locally and an attribute thereof according to the original resource address parameter. If it is judged that the value of the announce-to parameter is null and the original resource has created an "announce-to" attribute, the CSE sends a resource deletion request to the remote CSE. Herein, the resource deletion request includes an address of an announcement resource saved in the "announce-to" attribute. The embodiments of the present invention can provide a simple and quick way to implement the deletion of an announcement resource. The embodiment of the present invention also discloses a common service entity.

## Description

### Technical Field

The present invention relates to the field of terminal communication technologies, and more particularly, to a method for deleting an announcement resource and a common service entity.

### Background

Machine-to-machine M2M communication network consists of various M2M nodes and a bearer network. The M2M nodes communicate with each other through the bearer network. An M2M node includes at least one Application Entity AE or one Common Service Entity CSE. The application entity is a logical unit that performs actual M2M applications, and the common service entity is a logical unit that manages and serves applications.

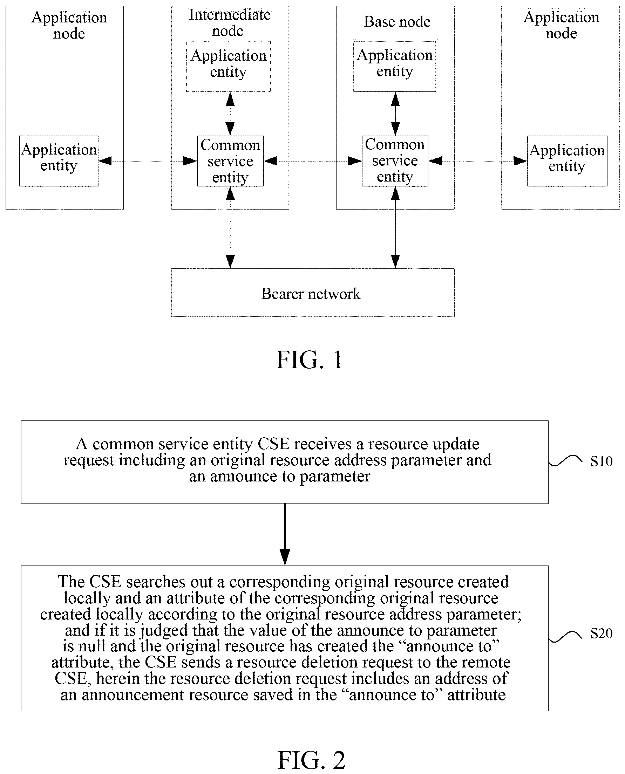

The communication between M2M applications is implemented through the interaction between common service entities CSEs. The M2M applications register to the CSEs, and the CSMs need to register to each other, and then the interaction of the M2M applications is realized through the communication between the CSEs. A schematic diagram of the M2M system architecture is shown in Fig. 1. In the M2M system architecture, an application node is an execution node at the end, such as a smart meter, a temperature measurement and control sensor, a fire alarm, a smart appliance, etc.; an intermediate node is middleware connecting the execution node at the end to the server at the network side, such as a gateway; and a base node is a server at the network side, and an application registered to the base node may be a management platform of the M2M service provider.

In practical applications, an application entity AE at the application node needs to register to common service entities at the application node, and does not need to register to common service entities at the intermediate node and common service entities at the base node. The CSEs to which the AE registers are called local CSEs, and other CSEs are called remote CSEs. To implement a communication between the CSEs, the CSE shall also register to a CSE with which the CSE is to communicate. When the CSE1 registers to the CSE2, the CSE2 is referred to as the local CSE of the CSE1. After the registration completes, the AE or CSE may create a resource at its local CSE. Usually, the resource created at the local CSE is called an original resource, and the resource created at the remote CSE by way of announcement is called an announcement resource.

In the related art, when an application at a base node needs to search for an application at an application node, the application at a base node sends a request to all intermediate nodes connected to the base node. To facilitate the intermediate nodes to search out the resource at the application node, the resource announcement manner is used. An announcement resource corresponding to the original resource at the application node is created at the intermediate nodes, and the announcement resource has the same "search label" attribute as the original resource, and may be linked to the "original resource address", so that the intermediate nodes may conveniently search out the required resources, and link to the "original resource address" to access the original resource according to the announcement resource. Correspondingly, an "announce-to" attribute created on the original resource is used to indicate that the original resource is announced to which remote CSEs. In addition, other attributes of the original resource may be announced to the remote CSEs as attributes of the announcement resource. An "announced attribute" is set in the original resource to indicate which attributes are announced.

For example, the resource announcement process may include the following steps. An application entity AE sends a resource creation request to a local CSE. Herein, the request message includes: a resource type parameter and an attribute parameter (Attribute 1, Attribute 2, ...). After the local CSE receives the resource creation request, the local CSE creates resource "AE1" of the application type for the AE, and creates various attributes according to the indication of the attribute parameters. For example, the local CSE creates attribute 1, and the attribute name of the attribute 1 is "application name", and the attribute value is set to "myApplication"; the local CSE creates attribute 2, and the attribute name of the attribute 2 is "application identifier", and the attribute value is set to "AE-ID"; and the local CSE creates attribute 3, the attribute name of the attribute 3 is "announce-to", and the attribute value is set after the local CSE receives a response returned by the remote CSE. That is, first an announcement resource creation request message is sent to the remote CSE address given in the attribute parameter "announce-to" of the resource creation request, and the remote CSE creates an announcement resource "AEl Annc" at the remote CSE after receiving the announcement resource creation request message, and sends a response message to the local CSE. Herein, the response message includes the address of the announcement resource "AE1_Annc". After the local CSE receives the response message, the local CSE saves the address of the received announcement resource into the attribute "announce-to" of the resource "AE1".

In the related art, if all the announcement resources need to be deleted, first, the original resource needs to be deleted, so the flow that all the announcement resources are deleted and then an original resource is created again is triggered. Therefore, the flow is relatively complex.

### Summary of the Invention

The technical problem to be solved in the present invention is to provide a method for deleting an announcement resource and a common service entity, which can provide a simple and quick way to implement the deletion of an announcement resource.

To solve the abovementioned technical problem, the present invention provides a method for deleting an announcement resource. The method includes the following steps.

A common service entity CSE receives a resource update request that includes an original resource address parameter and an "announce-to" parameter.

The CSE searches out a corresponding original resource created locally and an attribute of the corresponding original resource created locally according to the original resource address parameter. If it is judged that a value of the "announce-to" parameter is null and the original resource has created an "announce-to" attribute, the CSE sends a resource deletion request to the remote CSE. Herein, the deletion resource request includes an address of an announcement resource saved in the "announce-to" attribute.

In an exemplary embodiment, the method further includes the following feature.
after the CSE sends the resource deletion request to the remote CSE, the method further includes:
receiving a response sent by the remote CSE for indicating that the resource is deleted successfully; and
if responses from all the remote CSEs for indicating that resources are deleted successfully are received, the CSE deletes an "announce-to" attribute of the original resource; if only responses from some of the remote CSEs for indicating that resources are deleted successfully are received, the CSE deletes an addresses of announcement resources that have been deleted successfully from the "announce-to" attribute of the original resource, and sends an updated "announce-to" attribute to a sender of the resource update request.

In an exemplary embodiment, the method further includes the following feature.

At the same time or after the CSE sends a resource deletion request to the remote CSE, the method further includes: deleting the "announce-to" attribute of the original resource.

In an exemplary embodiment, the method further includes the following feature.

After the CSE deletes the "announce-to" attribute of the original resource, the method further includes:
if the original resource includes an "announced attribute" attribute, the "announced attribute" attribute is deleted.

To solve the abovementioned technical problem, the present invention further provides a method for realizing resource attribute announcement. The method includes the following steps.

A common service entity CSE receives a resource deletion request that includes an announcement resource address parameter.

The CSE searches out a corresponding announcement resource created locally according to the announcement resource address parameter, and deletes the announcement resource. If the deletion is successful, the CSE sends a response indicating that the resource is deleted successfully to a sender of the resource deletion request.

To solve the abovementioned technical problem, the present invention further provides a common service entity, including a request reception module and an announcement processing module.

The request reception module is arranged to receive a resource update request including an original resource address parameter and an announce-to parameter.

The announcement processing module is arranged to search out a corresponding original resource created locally and an attribute of the corresponding original resource created locally according to the original resource address parameter; if it is judged that a value of the announce-to parameter is null and the original resource has created an "announce-to" attribute, send a resource deletion request to the remote CSE. Herein, the resource deletion request includes an address of an announcement resource saved in the "announce-to" attribute.

In an exemplary embodiment, the common service entity further includes the following feature.

The announcement processing module is further arranged to receive a response sent by the remote CSE for indicating that the resource is deleted successfully after sending a resource deletion request to the remote CSE; if receiving responses from all the remote CSEs for indicating that resources are deleted successfully, delete the "announce-to" attribute of the original resource; if receiving only responses from some of the remote CSEs for indicating that resources are deleted successfully are received, delete addresses of announcement resources that have been deleted successfully from the "announce-to" attribute of the original resource, and send an updated "announce-to" attribute to a sender of the resource update request.

In an exemplary embodiment, the common service entity further includes the following feature.

The announcement processing module is further arranged to delete the "announce-to" attribute of the original resource at the same time or after sending the resource deletion request to the remote CSE.

In an exemplary embodiment, the common service entity further includes the following feature.

The announcement processing module is further arranged to, after deleting the "announce-to" attribute of the original resource, if the original resource includes an "announced attribute" attribute, delete the "announced attribute" attribute.

To solve the abovementioned technical problem, the present invention further provides a common service entity, including a request reception module and a resource deletion module.

The request reception module is arranged to receive a resource deletion request including an announcement resource address parameter.

The resource deletion module is arranged to search out a corresponding announcement resource locally created according to the announcement resource address parameter, and delete the announcement resource, and if the deletion is successful, feed a response indicating that the resource is deleted successfully back to a sender of the resource deletion request.

Compared with the related art, embodiments of the present invention provide a method for deleting an announcement resource and a common service entity. According to the method and the CSE, after the local CSE receives a resource update request, if it is judged that the value of the announce-to parameter included in the request is null and the original resource is announced to the remote CSE, the CSE sends a resource deletion request to the remote CSE. After receiving the resource deletion request, the remote CSE implements the deletion of the announcement resource. The embodiments of the present invention can provide a simple and quick way to realize the deletion of the announcement resource.

### Brief Description of Drawings

FIG. 1 is a schematic diagram of a machine type communication system in the related art.
FIG. 2 is a flow chart of a method for deleting an announcement resource (local CSE) in accordance with an embodiment of the present invention.
FIG. 3 is a flow chart of a method for deleting an announcement resource (remote CSE) in accordance with an embodiment of the present invention.
FIG. 4 is a block diagram of a common service entity (local CSE) in accordance with an embodiment of the present invention.
FIG. 5 is a block diagram of a common service entity (remote CSE) in accordance with an embodiment of the present invention.

### Detailed Description

Hereinafter, in conjunction with the accompanying drawings, embodiments of the present application will be described in detail. It should be noted that, in the case of no conflict, embodiments and features in the embodiments of the present application may be arbitrarily combined with each other.

As shown in FIG. 2, an embodiment of the present invention provides a method for deleting an announcement resource. The method includes the following steps S10-S20.

In step S10, a common service entity CSE receives a resource update request including an original resource address parameter and an announce-to parameter.

In step S20, the CSE searches out a corresponding original resource created locally and an attribute of the corresponding original resource created locally according to the original resource address parameter. If it is judged that the value of the announce-to parameter is null and the original resource has created the "announce-to" attribute, the CSE sends a resource deletion request to the remote CSE. Herein, the resource deletion request includes an address of the announcement resource saved in the "announce-to" attribute.

The method further includes the following feature.

In an exemplary embodiment, the resource update request is initiated by an application entity or a common service entity that registers to the local CSE.

Herein, if the original resource includes an "announce-to" attribute, the CSE judges that the original resource has been announced to the remote CSE.

In an exemplary embodiment, after the CSE sends a resource deletion request to the remote CSE, the method further includes the following operations.

The CSE receives a response sent by the remote CSE for indicating that the resource is deleted successfully.

If receiving responses from all the remote CSEs for indicating that resources are deleted successfully, the CSE deletes the "announce-to" attribute of the original resource. If receiving only responses from some of the remote CSEs for indicating that resources are deleted successfully, the CSE deletes addresses of announcement resources that have been successfully deleted from the "announce-to" attribute of the original resource, and sends an updated "announce-to" attribute to a sender of the resource update request.

Herein, the CSE judges whether responses returned by all the remote CSEs for indicating that resources are deleted successfully are received. A timer may be started after sending the resource deletion request, and the judgment is performed in a timing period of the timer.

In an exemplary embodiment, at the same time or after the CSE sends the resource deletion request to the remote CSE, the method further includes: deleting an "announce-to" attribute of the original resource. That is, the CSE directly deletes the "announce-to" attribute of the original resource, no matter whether a response indicating that the resource is deleted successfully is received.

In an exemplary embodiment, after the CSE deletes the "announce-to" attribute of the original resource, the method further includes if the original resource includes an "announced attribute" attribute, the CSE deletes the "announced attribute" attribute.

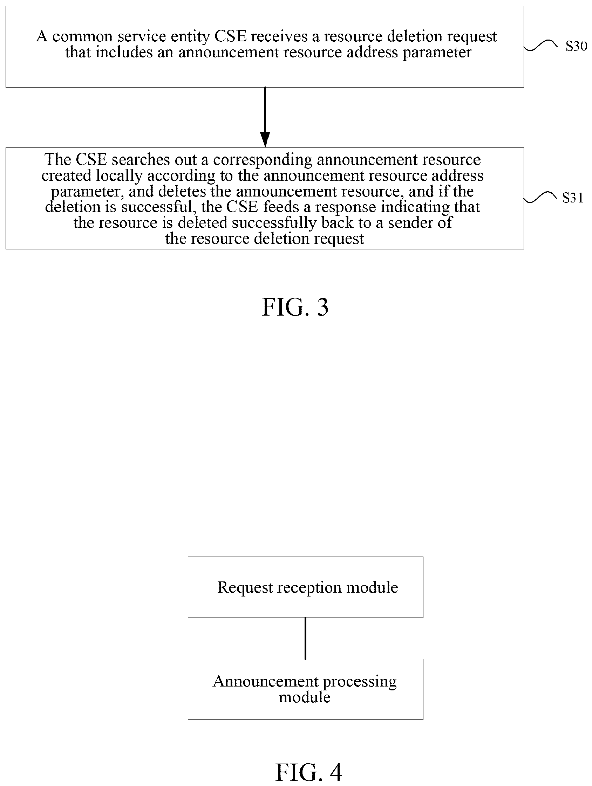

As shown in FIG. 3, an embodiment of the present invention further provides a method for deleting an announcement resource. The method includes the following steps S30-S31.

In step S30, a common service entity CSE receives a resource deletion request that includes an announcement resource address parameter.

In step S31, the CSE searches out a corresponding original resource created locally according to the announcement resource address parameter, and deletes the announcement resource. If the deletion is successful, the CSE feeds a response indicating that the resource is deleted successfully back to a sender of the resource deletion request.

As shown in FG. 4, an embodiment of the present invention provides a common service entity, including a request reception module and an announcement processing module.

The request reception module is arranged to receive a resource update request including an original resource address parameter and an announce-to parameter.

The announcement processing module is arranged to search out a corresponding original resource created locally and an attribute of the corresponding original resource created locally according to the original resource address parameter; if it is judged that the value of the announce-to parameter is null and the original resource has created an "announce-to" attribute, send a resource deletion request to the remote CSE. Herein, the resource deletion request includes an address of the announcement resource saved in the "announce-to" attribute.

The common service entity further includes the following feature.

In an exemplary embodiment, the announcement processing module is further arranged to receive a response sent by the remote CSE for indicating that the resource is deleted successfully after sending a resource deletion request to the remote CSE; if responses from all the remote CSEs for indicating that resources are deleted successfully are received, delete the "announce-to" attribute of the original resource; and if only responses from some of the remote CSEs for indicating that resources are deleted successfully are received, delete addresses of announcement resources that have been deleted successfully from the "announce-to" attribute of the original resource, and send an updated "announce-to" attribute to a sender of the resource update request.

In an exemplary embodiment, the announcement processing module is further arranged to delete the "announce-to" attribute of the original resource at the same time or after sending the resource deletion request to the remote CSE.

In an exemplary embodiment, the announcement processing module is further arranged to, after deleting the "announce-to" attribute of the original resource, if the original resource includes an "announced attribute" attribute, delete the "announced attribute" attribute.

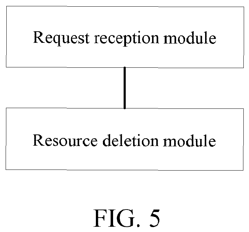

As shown in FIG. 5, an embodiment of the present invention further provides a common service entity, including a request reception module and a resource deletion module.

The request reception module is arranged to receive a resource deletion request including an announcement resource address parameter.

The resource deletion module is arranged to search out a corresponding announcement resource created locally according to the announcement resource address parameter, and delete the announcement resource; and if the deletion is successful, feed a response indicating that the resource is deleted successfully back to a sender of the resource deletion request.

### Application Example

In step S101, an application entity AE sends a resource update request to the local CSE. The request message includes an original resource address parameter and an announce-to parameter. Herein, the value of the announce-to parameter is NULL.

Herein, the original resource address parameter is, for example: LocalCSEroot/AE1.

In step S102, the local CSE reads the original resource address, and reads the attribute "announce-to" of the resource "AE1", and sends a resource deletion request message to the remote CSE corresponding to the address of the announcement resource in the "announce-to".

Herein, the local CSE may set the parameter "to" in the resource deletion request message to be the address in the "announce-to" attribute.

The address in the "announce-to" attribute is the address of the announcement resource, and its address includes the following content:
address of the CSE + address of the announcement resource inside the CSE.

Therefore, the address of the remote CSE that needs to be sent is known through the address in the "announce-to" attribute, and after the parameter "to" is set to be the address in the "announce-to" attribute, the remote CSE deletes the resource addressed according to the parameter after receiving the request.

In step S103, after receiving the resource deletion request message, the remote CSE deletes the resource after confirming that the resource required to be deleted is "AE1-Annc" according to the "resource address".

In step S104, the remote CSE sends a response message to the local CSE, and the response message includes an indication that the resource has been deleted successfully.

In step S105, the local CSE deletes the attribute "announce-to" of the resource "AE1" after receiving the response message sent by the remote CSE.

Those ordinarily skilled in the art can understand that all or some of steps of the abovementioned method may be completed by the programs instructing the relevant hardware, and the abovementioned programs may be stored in a computer-readable storage medium, such as read only memory, magnetic or optical disk or the like. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

It should be noted that, the present invention may have a variety of other embodiments, and without departing from the rule and the substance of the present invention, those skilled in the art can make all appropriate changes and modifications in accordance with the present invention. These appropriate changes and modifications should fall within the protection scope of the appended claims of the present invention.

### Industrial Applicability

The abovementioned embodiments provide a method for deleting an announcement resource and a common service entity. After the local CSE receives a resource update request, if it is judged the value of the announce-to parameter included in the request is null and the original resource is announced to a remote CSE, the CSE sends a resource deletion request to the remote CSE. After receiving the resource deletion request, the remote CSE implements the deletion of the announcement resource. The abovementioned embodiment can provide a simple and quick way to realize the deletion of the announcement resource.

## Claims

1. A method for deleting an announcement resource, comprising:
a common service entity, CSE, receiving a resource update request that includes an original resource address parameter and an announce-to parameter;
the CSE searching out a corresponding original resource created locally and an attribute of the corresponding original resource created locally according to the original resource address parameter; if judging that a value of the announce-to parameter is null and the original resource has created an "announce-to" attribute, sending a resource deletion request to a remote CSE, wherein the resource deletion request includes an address of an announcement resource saved in the "announce-to" attribute.

2. The method of claim 1, wherein,
after the CSE sends the resource deletion request to the remote CSE, the method further comprises:
receiving a response sent by the remote CSE for indicating that the resource is deleted successfully;
if receiving responses from all the remote CSEs for indicating that resources are deleted successfully, deleting the "announce-to" attribute of the original resource; if receiving only responses from some of the remote CSEs for indicating that resources are deleted successfully, deleting addresses of announcement resources that have been deleted successfully from the "announce-to" attribute of the original resource, and sending an updated "announce-to" attribute to a sender of the resource update request.

3. The method of claim 1, wherein,
at the same time or after the CSE sends the resource deletion request to the remote CSE, the method further comprises: deleting the "announce-to" attribute of the original resource.

4. The method of claim 2 or 3, wherein,
after the CSE deletes the "announce-to" attribute of the original resource, the method further comprises:
if the original resource includes an "announced attribute" attribute, deleting the "announced attribute" attribute.

5. A method for realizing resource attribute announcement, wherein, the method comprises:
a common service entity, CSE, receiving a resource deletion request that includes an announcement resource address parameter;
the CSE searching out a corresponding announcement resource created locally according to the announcement resource address parameter, and deleting the announcement resource; if the deletion is successful, feeding a response indicating that the resource is deleted successfully back to a sender of the resource deletion request.

6. A common service entity, comprising:
a request reception module, arranged to receive a resource update request including an original resource address parameter and an announce-to parameter;
an announcement processing module, arranged to search out a corresponding original resource created locally and an attribute of the corresponding original resource created locally according to the original resource address parameter; if judging that a value of the announce-to parameter is null and the original resource has created an "announce-to" attribute, send a resource deletion request to a remote CSE, herein the resource deletion request includes an address of an announcement resource saved in the "announce-to" attribute.

7. The common service entity of claim 6, wherein,
the announcement processing module is further arranged to receive a response sent by the remote CSE for indicating that the resource is deleted successfully after sending a resource deletion request to the remote CSE; if receiving responses from all the remote CSEs for indicating that resources are deleted successfully, delete the "announce-to" attribute of the original resource; if receiving only responses from some of the remote CSEs for indicating that resources are deleted successfully, delete addresses of announcement resources that have been deleted successfully from the "announce-to" attribute of the original resource, and send an updated "announce-to" attribute to a sender of the resource update request.

8. The common service entity of claim 6, wherein,
the announcement processing module is further arranged to delete the "announce-to" attribute of the original resource at the same time or after sending the resource deletion request to the remote CSE.

9. The common service entity of claim 7 or 8, wherein,
the announcement processing module is further arranged to, after deleting the "announce-to" attribute of the original resource, if the original resource includes an "announced attribute" attribute, delete the "announced attribute" attribute.

10. A common service entity, comprising:
a request reception module, arranged to receive a resource deletion request including an announcement resource address parameter;
a resource deletion module, arranged to search out a corresponding announcement resource locally created according to the announcement resource address parameter, and delete the announcement resource, and if the deletion is successful, feed a response indicating that the resource is deleted successfully back to a sender of the resource deletion request.
